Europäisches Patentamt

**European Patent Office**

**Office européen des brevets**

(19)

(11) Veröffentlichungsnummer: **0 070 589**
**B1**

(12) **EUROPÄISCHE PATENTSCHRIFT**

(45) Veröffentlichungstag der Patentschrift:
**16.09.87**

(51) Int. Cl.⁴: **B 01 D  29/32,** B 01 D  29/38,
B 01 D  37/02

(21) Anmeldenummer: **82200844.7**

(22) Anmeldetag: **07.07.82**

(54) **Rückspüllbares Kerzenanschwemmfilter.**

(30) Priorität: **16.07.81  CH 4653/81**

(43) Veröffentlichungstag der Anmeldung:
**26.01.83 Patentblatt 83/4**

(45) Bekanntmachung des Hinweises auf die Patenterteilung:
**16.09.87 Patentblatt 87/38**

(84) Benannte Vertragsstaaten:
**AT BE CH DE FR GB IT LI LU NL SE**

(56) Entgegenhaltungen:
**DE - C - 91 903**
**GB - A - 16 185**
**GB - A - 1 069 768**
**US - A - 3 392 835**

(73) Patentinhaber: **DrM, Dr. Müller AG, Alte Landstrasse 421,
CH-8708 Männedorf ZH (CH)**

(72) Erfinder: **Müller, Hans, Dr. Ing., im Allmendli,
CH-8703 Erlenbach (CH)**

(74) Vertreter: **Herrmann, Peter Johannes, Dr. Patentanwalt,
Lerchenbühlhöhe 5, CH-6045 Meggen (CH)**

## Beschreibung

Die Erfindung betrifft einen rückspülbaren Kerzenanschwemmfilter zum kontinuierlichen Abzug eines Klarfiltrates, bestehend aus einem zu seiner Längsachse vertikalen Filterbehälter, in welchem eine Anzahl von Filterelementen hintereinander hängend an herausnehmbaren Sammelrohren angeordnet sind.

Filtervorrichtungen für Flüssigkeiten, deren Filterelemente aus hängenden Kerzen bestehen und reihenweise herausnehmbar angeordnet sind, sind bekannt. So beschreibt die DE-OS 27 41 639 einen Filterbehälter, in welchem Sammelrohre mit hintereinander angeordneten hängenden Filterelementen befestigt sind. Die Sammelrohre liegen nebeneinander auf Stützkörpern auf und können reihenweise aus dem Filterbehälter herausgenommen werden.

Aus der AT-PS 211 329 ist eine Anlage zur Rückspülung von reihenweise angeordneten Filterkerzen bekannt, die stehend auf Sammelleitungen befestigt sind. Diese Sammelleitungen sind beidseitig waagerecht durch die Behälterwände geführt. Die beidseitige Durchführung ist sehr aufwendig. Zusätzlich zu den vielen Kesselbohrungen ist jede Sammelleitung mit zwei Absperrorganen versehen, was eine Vielzahl von Ventilen und Armaturen erforderlich macht.

Bei allen diesen Verfahren und Filtervorrichtungen muss während der Rückspülung das Auslassventil für das Klarfiltrat auf Rückführung umgestellt werden, d.h. ein Klarfiltrat kann während des gesamten Rückspülvorganges nicht gewonnen werden.

Aufgabe der Erfindung ist es, ein rückspülbares Kerzenanschwemmfilter zu schaffen, bei dem ein Auswaschen der Feststoffe mit Waschflüssigkeit in ein und demselben Filterbehälter erfolgen kann, ohne die Abfuhr von Klarfiltrat unterbrechen zu müssen.

Diese Aufgabe wird erfindungsgemäss mittels eines rückspülbaren Kerzenanschwemmfilters gemäss Anspruch 1 gelöst, das dadurch gekennzeichnet ist, dass der Filterbehälter durch vertikale, mit dem Behälterboden und der Behälterwand verbundenen Trennwände in eine Filterkammer mit dem Trübezulauf und in wenigstens zwei daran anschliessende, ebenfalls Filterelemente aufweisende Waschkammern unterteilt ist, dass jede Trennwand zusammen mit einer, dem jeweiligen Trüblauf zugewandten, im Abstand zum Behälterboden angebrachten vertikalen Schachtwand einen Überlaufschacht bildet, dass zur Zufuhr von Waschflüssigkeit und Förderung des durch Rückspülung abgeworfenen Filterkuchens in die jeweilige Waschkammer unterhalb der Überlaufschächte Stutzen vorgesehen sind, dass die letzte Waschkammer einen Stutzen zum Austragen des gewaschenen Feststoffs aufweist.

Die Überlaufschächte werden durch Trennwände gebildet, wobei die dem Trüblauf zugewandte Trennwand in einem bestimmten Abstand vom Behälterboden entfernt angebracht ist und in ihrem oberen Teil über das Flüssigkeitsniveau hinaus in den Gasraum führt. Die zweite Schachtwand ist am Boden des Behälters befestigt und bildet im oberen Teil ein Überlaufwehr. Die Waschflüssigkeit wird über die Zuführungsschächte zusammen mit den von den Filterelementen abgeworfenen Feststoffen in den Schächten von unten nach oben gefördert, wobei sie gleichzeitig gewaschen und über das Überlaufwehr in eine weitere Filterkammer gefördert werden. Dieser Vorgang kann mehrmals wiederholt werden.

Das Flüssigkeitsniveau über den Filterelementen wird über den Gasdruck im Kopf des Filterbehälters mittels eines Niveausteuergerätes geregelt. Das Auslaufventil wird automatisch gesteuert, wobei die Rückspülung der Filterkerzen reihenweise unterteilt erfolgt.

Die Erfindung soll anhand einer Zeichnung näher beschrieben werden.

Es zeigen:

Fig. 1 einen Vertikalschnitt durch den Filterbehälter,

Fig. 2 einen Horizontalschnitt durch das Filter der Figur 1,

Fig. 3 ein Detail der Rückspülvorrichtung.

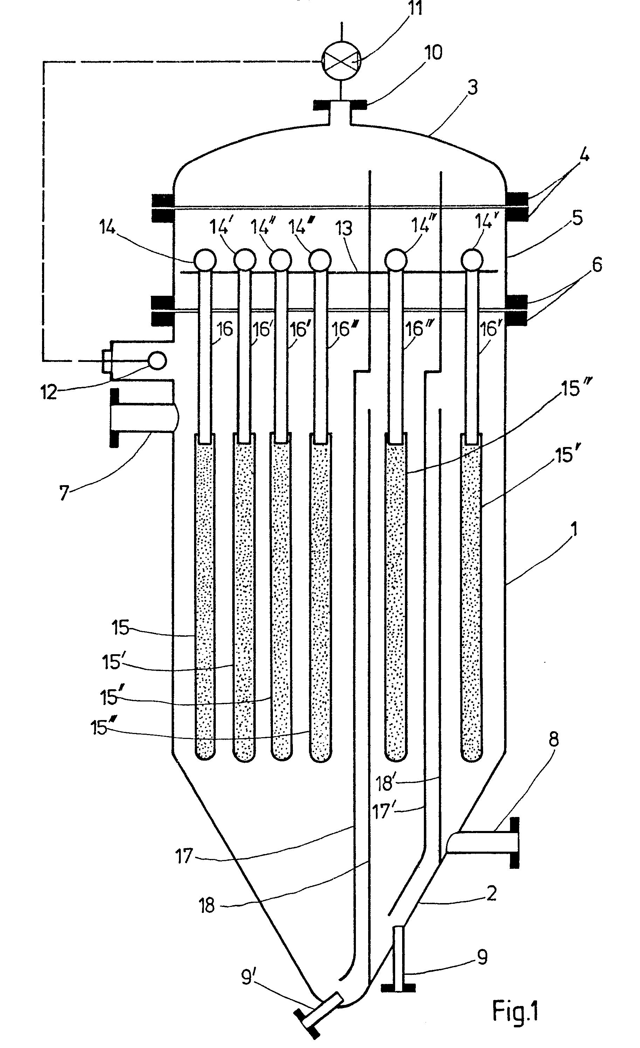

Der Filterbehälter besteht gemäss Figur 1 aus einer zylindrischen Behälterwand 1 mit einem konischen Boden 2 und einem Deckel 3. Der Deckel 3 ist durch ein Flanschenpaar 4 an einem zylindrischen Zwischenteil 5 befestigt, welcher seinerseits mit dem Behälter durch ein Flanschenpaar 6 verbunden ist. Der Filterbehälter weist einen Zulaufstutzen 7 für den Trüblauf und einen Stutzen 8 für die gereinigte Feststoffsuspension auf. Stutzen 9 und 9' sind für Waschflüssigkeit und/oder Gaszufuhr vorgesehen. Im Deckel 3 des Filterbehälters befindet sich ein Stutzen 10 für Gaszuoder -abfuhr. Ein Regelventil 11 wird über eine Niveausteuerung 12 geregelt. Auf einem Kreisring 13 sind beispielsweise Sammelrohre 14, 14', 14'', 14''', 14'ᵛ, 14ᵛ befestigt, deren Anzahl von dem vorhandenen Platz im Behälter und der gewünschten Filterfläche abhängig ist. An den Sammelrohren sind Filterelemente 15, 15', 15'', 15''', 15'ᵛ, 15ᵛ an den Rohren 16, 16', 16'', 16''', 16'ᵛ, 16ᵛ befestigt. Eine Schachtwand 17 ist im unteren Teil des konischen Bodens 2 zur Trübseite offen; eine zweite Trennwand 18 ist mit dem Boden 2 verbunden. Waschkammern werden zwischen den Trennwänden 18, 18' und den Schachtwänden 17, 17' und der Behälterwand gebildet, die mit einer oder mehreren Reihen von Sammelrohren 14'ᵛ bzw. 14ᵛ über Zwischenstücke 16'ᵛ bzw. 16ᵛ befestigt sind.

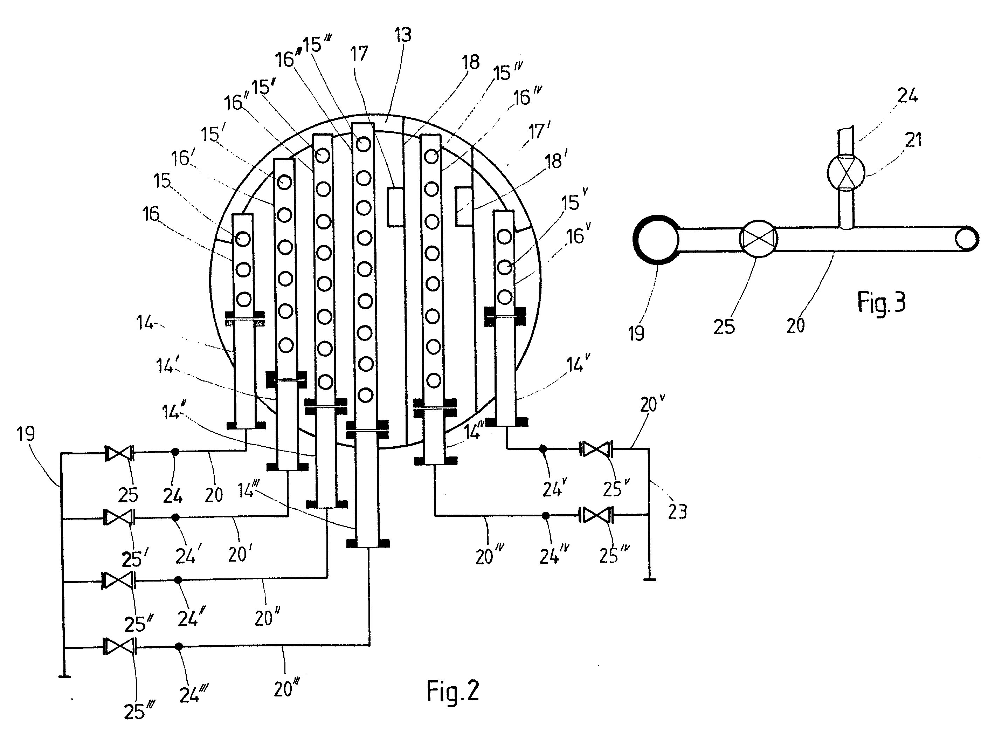

Figur 2 gibt einen Horizontalschnitt in der Höhe der Filterelemente 15 wieder. In die Leitungen 20, 20', 20'', 20''', 20'ᵛ, 20ᵛ münden Leitungen 24, 24', 24'', 24''', 24'ᵛ, 24ᵛ, die mit Ventilen 21 versehen sind. Am Ende der Abzweigleitungen 20 befinden sich Absperrventile 25, 25', 25'', 25''', 25'ᵛ, 25ᵛ, die auf eine Sammelleitung 19 zur Abfuhr der Klarfiltrate führen. Das Sammelrohr 14'ᵛ in einer ersten Waschkammer führt auf die Leitung 20'ᵛ, Ventil 21'ᵛ und Waschrohr 24'ᵛ, Absperrventil 25'ᵛ und eine Abflussleitung 23. Entsprechend führt aus einer zweiten Waschkammer eine Leitung 20ᵛ vom

Sammelrohr 24$^V$ über Ventil 25$^V$ und Waschleitung 24$^V$ mit einem Ventil 21' auf die Leitung 23.

Im Betrieb wird über den Einlaufstutzen 7 Trübe in den Filterbehälter eingeführt. Die Feststoffe lagern sich auf den Geweben der Filterelemente 15 ab, wo sie einen Feststoffkuchen bilden. Die vom Feststoff befreite Flüssigkeit verlässt über die Zwischenstücke 16 und die Sammelrohre 14 als Filtrat den Filterbehälter. Sobald der Filterkuchen eine vorgegebene Dicke erreicht hat, werden sukzessiv die einzelnen Reihen der auf den Sammelrohren 14 befestigten Filterelemente durch Schliessen eines der Klarlaufventile 25 und Öffnen eines der Ventile 21 in der Leitung 24 mittels eines Gases oder einer Flüssigkeit vom Filterkuchen befreit, welcher in den konischen Boden 2 absinkt. Die vom Kuchen befreite Reihe 16 der Filterelemente 15 ist nun für die weitere Filtration frei, und eine weitere Reihe, beispielsweise 16', kann auf die gleiche Weise vom Filterkuchen befreit werden. Der abgesunkene Feststoff kann nun über den Stutzen 9' mit Waschflüssigkeit unter Druck versetzt werden, die den Feststoff in die erste Waschkammer nach oben fördert, wo er sich an den Filterelementen 15$^{IV}$ abscheidet, erneut durch Schliessen des Ventils 25$^{IV}$ und Öffnen des Ventils 21 in die Leitung 24$^{IV}$ entfernt werden und auf die beschriebene Weise in eine zweite Waschkammer usw. befördert werden. Der Waschvorgang kann abhängig von der Anzahl der Waschkammern beliebig oft vorgenommen werden. Der gewaschene Feststoff wird über den Stutzen 8 ausgetragen.

Das Verfahren ist in besonderer Weise geeignet, Feststoffe auszuwaschen. Als Beispiel sei hier die Befreiung von Rotschlamm von Natronlauge zu nennen. Es ist aber auch zur Solereinigung vor und nach der Elektrolyse geeignet. Aber auch zur Reinigung der Spinnbäder bei der Viskoseherstellung und Aufbereitung von Kondensat, PVC-Abwässer und der Filtration von Dünnsäften bei der Zuckerfabrikation hat sich das Verfahren als geeignet erwiesen.

**Patentansprüche**

1. Rückspülbarer Kerzenanschwemmfilter zum kontinuierlichen Abzug eines Klarfiltrates, bestehend aus einem zu einer Längsachse vertikalen Filterbehälter, in welchem eine Anzahl von Filterelementen (15) hintereinander hängend an herausnehmbaren Sammelrohren (14) angeordnet sind, dadurch gekennzeichnet, dass der Filterbehälter durch vertikale, mit dem Behälterboden (2) und der Behälterwand (1) verbundenen Trennwänden (18, 18') in eine Filterkammer mit dem Trübezulauf (7) und in wenigstens zwei daran anschliessende, ebenfalls Filterelemente (15$^{IV}$, 15$^V$) aufweisende Waschkammern unterteilt ist, dass jede Trennwand (18, 18') zusammen mit einer, dem jeweiligen Trüblauf zugewandten, im Abstand zum Behälterboden (2) angebrachten vertikalen Schachtwand (17, 17') einen Überlaufschacht bildet, dass zur Zufuhr von Waschflüssigkeit und Förderung des durch Rückspülung abgeworfenen Filterkuchens in die jeweilige Waschkammer unterhalb der Überlaufschächte Stutzen (9, 9') vorgesehen sind, dass die letzte Waschkammer einen Stutzen (8) zum Austragen des gewaschenen Feststoffs aufweist.

2. Kerzenanschwemmfilter nach Anspruch 1, dadurch gekennzeichnet, dass im Innern des Filterbehälters ein Niveausteuergerät (12) vorgesehen ist.

**Claims**

1. A backwashable alluvial candle filter for continuous removal of a filtrate, comprising a vertical filter container, a plurality of filter elements (15) suspendendly mounted on removably attached collecting pipes (14), wherein the interior of the filter container is subdivided into a filter chamber with inlet means (7) for a pulp and at least with two washing chambers, comprising filter elements (15$^{IV}$, 15$^V$), by at least two vertically mounted separating walls (18, 18'), connected with the bottom (2) of the container and the wall (1) of the container; and that each of said separating walls (18, 18') form an overflow shaft by a vertically mounted shaft wall (17, 17') faced towards the pulp side and spaced from the bottom (2) of the container, and that pipes (9, 9') are provided for washing fluid and filter cakes released by backwashing and displaced into the washing chamber underneath the overflow shafts and that the last washing chamber is provided with an outlet pipe (8).

2. Alluvial candle filter as defined in claim 1, wherein a level controlling element (12) is arranged in the interior of the filter container.

**Revendications**

1. Filtre à bougie à couches, lavable à contre-courant pour l'évacuation en continu d'un filtrat clarifié, comportant un récipient de filtration vertical par rapport à son axe longitudinal, dans lequel un certain nombre d'éléments de filtration (15) sont disposés suspendus les uns derrière les autres à des tubes collecteurs (14), caractérisé en ce que le récipient de filtration est subdivisé par des cloisons (18, 18') verticales reliées au fond (2) du récipient et à la paroi (1) du récipient en une chambre de filtration comportant l'arrivée de liquide trouble (7) et en au moins deux chambres de lavage contiguës à celle-ci et possédant également des éléments de filtration (15$^{IV}$, 15$^V$); en ce que chaque cloison (18, 18') forme conjointement avec une paroi de colonne (17, 17') verticale, montée à une certaine distance du fond (2) du récipient et orientée vers le courant de liquide trouble respectif, une colonne de trop-plein; en ce que des tubulures (9, 9') sont prévues dans les chambres de lavage respectives, sous les colonnes de trop-plein, pour l'arrivée du fluide de lavage et le refoulement du tourteau de filtration détaché par le lavage à contre-courant; et en ce que la dernière chambre de lavage possède une tubulure (8) pour l'évacuation de la substance solide lavée.

2. Filtre à bougie à couches selon la revendication 1, caractérisé en ce qu'un appareil de commande de niveau (12) est prévu à l'intérieur du récipient de filtration.

0 070 589

Fig.1

Fig.3

Fig.2